# EUROPÄISCHE PATENTANMELDUNG

(11) **EP 2 258 960 A2**
(43) Veröffentlichungstag der Anmeldung: **08.12.2010**
(21) Anmeldenummer: 10156293.2
(22) Anmeldetag: 12.03.2010
(51) Int. Cl.: F16D 57/04

(54) **Hydrodynamischer Retarder**

(30) Priorität: 03.06.2009 DE 102009026689
(71) Anmelder: ZF Friedrichshafen AG, 88038 Friedrichshafen (DE)
(72) Erfinder: Sauter, Frank, 88074 Meckenbeuren (DE); Wanninger, Heinz, 88074 Meckenbeuren (DE)

(57) **Zusammenfassung**

Die Erfindung betrifft einen hydrodynamischen Retarder (8) für einen Antriebsstrang eines Kraftfahrzeuges, mit einem Rotor (10) und einem Stator (9), welche jeweils mit Schaufeln bestückt und einander zugewendet in einem gemeinsamen Gehäuse (12) platziert sind, wobei zwischen dem Rotor (10) und dem Stator (9) ein Arbeitsraum (11) ausgebildet ist, welcher über einen externen Kreislauf mit einer definierten Menge eines Fluides befüllbar ist, um mittels Beschleunigung dieses Fluides durch die Schaufeln des Rotors (10) und anschließende Verzögerung an den Schaufeln des Stators (9) eine Bewegung des Rotors (10) gezielt abzubremsen, wobei ferner in einen, zwischen Rotor (10) und Gehäuse (12) in radialer Richtung ausgebildeten Dichtspalt (15) ein Auslasskanal (14) einmündet, welcher radial im Gehäuse (12) verläuft und über den zwischen das Gehäuse (12) und den Rotor (10) gelangtes Fluid abführbar ist.

## Beschreibung

Die Erfindung betrifft einen hydrodynamischen Retarder für einen Antriebsstrang eines Kraftfahrzeuges, mit einem Rotor und einem Stator, welche jeweils mit Schaufeln bestückt und einander zugewendet in einem gemeinsamen Gehäuse platziert sind, wobei zwischen dem Rotor und dem Stator ein Arbeitsraum ausgebildet ist, welcher über einen externen Kreislauf mit einer definierten Menge eines Fluides befüllbar ist, um mittels Beschleunigung des Fluides durch die Schaufeln des Rotors und anschließende Verzögerung an den Schaufeln des Stators eine Bewegung des Rotors gezielt abzubremsen.

Im Bereich der Nutzkraftfahrzeuge kommen häufig neben einer herkömmlichen Betriebsbremse so genannte Dauerbremsen zum Einsatz, um bei höheren und andauernden Bremsleistungen, beispielsweise bei Bergabfahrten, die Betriebsbremse zu entlasten und eine zuverlässige Abbremsung des Fahrzeuges zu gewährleisten. Hierbei sind unter Anderem so genannte hydrodynamische Retarder üblich, bei welchen die Strömungsenergie einer Flüssigkeit zum Bremsen des Kraftfahrzeuges genutzt wird. Je nach Anordnung des hydrodynamischen Retarders im Antriebsstrang des Kraftfahrzeuges zwischen Motor und Getriebe oder zwischen Getriebe und Antriebsachse ist hierbei zwischen Primärretardern und Sekundärretardern zu unterscheiden. In beiden Fällen wird über den Füllungsgrad des hydrodynamischen Retarders das zu erzeugende Bremsmoment gesteuert.

Aus der DE 10 2007 029 018 A1 ist ein hydrodynamischer Retarder bekannt, welcher über einen Rotor und einen Stator verfügt, die einander zugewendet in einem gemeinsamen Gehäuse platziert sind. Hierbei sind sowohl der Rotor als auch der Stator jeweils mit einer Beschaufelung versehen und bilden zwischen sich einen Arbeitsraum aus, der über einen externen Kreislauf gezielt mit einer definierten Menge eines Fluid befüllt werden kann. Der Rotor ist mit seinem Innendurchmesser auf einer, im Gehäuse rotierbar gelagerten Antriebswelle platziert, welche durch ein Ritzel in Rotation versetzt wird. Hingegen ist der Stator ortsfest mit dem umliegenden Gehäuse verbunden und weist zudem im Bereich des Arbeitsraums an seinem Umfang mehrere Auslassbohrungen auf, über welche das Fluid in einen dahinterliegenden Ringkanal gelangen und hierüber zum externen Kreislauf zurückgeführt werden kann.

Wird nun ein bestimmtes Bremsmoment angefordert, beispielsweise durch Vorgabe des Fahrzeugführers über ein Bremspedal, so wird eine entsprechend große Menge an Fluid in den Arbeitsraum zwischen Rotor und Stator eingebracht. Dieses Fluid wird daraufhin aufgrund der Rotation des Rotors und über dessen Beschaufelung in Richtung Stator beschleunigt und trifft dort auf die stillstehenden Schaufeln auf. In Folge dessen wird das Fluid abgebremst und in Richtung Rotor zurückgeleitet. Eine Abbremsung der Antriebswelle des Rotors erfolgt also durch eine Energieumwandlung der kinetischen Energie in Wärme aufgrund von Flüssigkeitsreibungen und Dralländerungen des Fluids.

Da allerdings die Antriebswelle des hydrodynamischen Retarders und damit der Rotor auch im Nicht-Bremsbetrieb rotieren, trägt eine noch im Arbeitsraum befindliche Fluidmenge zur Bildung eines, in diesem Fall unerwünschten Bremsmoments bei. Aus diesem Grund ist im unteren Gehäusebereich ein zusätzlicher, sich durch den Stator hindurch erstreckender Auslass vorgesehen, über welchen im Nicht-Bremsbetrieb durch Öffnen eines Ventils das Fluid zusätzlich zu den Auslassbohrungen aus dem Arbeitsraum gelangen kann. Folglich wird die Entleerung des Arbeitsraums durch diese zusätzliche Bohrung verbessert und damit die Verlustleistung des hydrodynamischen Retarders vermindert.

Allerdings besteht bei einem hydrodynamischen Retarder des Standes der Technik das Problem, dass Fluid zwischen das Gehäuse und den Rotor gelangen kann und an dieser Stelle aufgrund der geringen Spalte ein nicht zu vernachlässigendes Reibmoment erzeugt. Diese Restfluidmenge kann dabei nicht über die Auslassbohrungen oder den zusätzlichen Auslass in den externen Kreislauf zurückgelangen und sorgt daher auch im Nicht-Bremsbetrieb für ein entsprechendes Schleppmoment und folglich für eine Erhöhung des Kraftstoffverbrauchs des Kraftfahrzeuges.

Es ist daher die Aufgabe der vorliegenden Erfindung, einen hydrodynamischen Retarder für einen Antriebsstrang eines Kraftfahrzeuges zu schaffen, bei welchem im Nicht-Bremsbetrieb eine Restfluidmenge nicht nur aus dem Arbeitsraum, sondern zusätzlich auch aus dem zwischen Rotor und Gehäuse gebildeten Bereich abführbar ist.

Diese Aufgabe wird ausgehend vom Oberbegriff des Anspruchs 1 in Verbindung mit dessen kennzeichnenden Merkmalen gelöst. Die darauffolgenden abhängigen Ansprüche geben jeweils vorteilhafte Weiterbildungen der Erfindung wieder.

Die Erfindung umfasst die technische Lehre, dass in einen, zwischen Rotor und Gehäuse in radialer Richtung ausgebildeten Dichtspalt ein Auslasskanal einmündet, welcher radial im Gehäuse verläuft und über den das zwischen Gehäuse und Rotor gelangte Fluid abführbar ist. Durch Vorsehen eines Auslasskanals in diesem Bereich wird erreicht, dass eine Restmenge an Fluid allein durch die Dynamik des Rotors in diesen Auslasskanal gedrückt und dabei auch an einem Zurücklaufen in den Dichtspalt wirksam gehindert wird. Dementsprechend wird eine zuverlässige Abführung verwirklicht, die zudem in jeder Winkellage des Gehäuses platziert werden kann.

Gemäß einer Ausführungsform der Erfindung ist der Auslasskanal im oberen Bereich des Gehäuses ausgebildet. Dies hat den Vorteil, dass das Fluid druckfrei abgeführt werden kann, indem der Auslasskanal oberhalb des Ölspiegels liegend angeordnet wird. Eine Anordnung am obersten Punkt des Gehäuses hat sich hierbei als besonders vorteilhaft erwiesen.

In Weiterbildung der Erfindung ist im Bereich der Einmündung des Auslasskanals in den Dichtspalt eine Tasche vorgesehen, welche tangential zu einem Außendurchmesser des Rotors orientiert angeordnet ist. Durch das Vorsehen der Tasche und die tangentiale Anordnung kann das Zuführen von Fluid zum Auslasskanal über den Rotor weiter verbessert werden. Vorteilhafterweise wird die Tasche hierbei immer vollständig mit dem Außendurchmesser des Rotors überdeckt, was die Entleerwirkung weiter verbessert.

Entsprechend einer vorteilhaften Ausführungsform der Erfindung ist der Auslasskanal über ein schaltbares Ventil verschließbar. Dieses Ventil verschließt den Auslasskanal während des Bremsbetriebs des hydrodynamischen Retarders und vermindert somit eine unzulässige Leckage von Fluid aus dem Arbeitsraum.

Es ist eine weitere, vorteilhafte Ausführungsform der Erfindung, dass das Ventil hydraulisch betätigbar ist. Hierdurch kann eine Schaltung des Ventils auf einfache und gleichzeitig zuverlässige Art und Weise mit einer Druckbeaufschlagung des Arbeitsraums des hydrodynamischen Retarders gekoppelt werden. Allerdings ist je nach Fahrzeugsystem auch eine pneumatische oder elektrische Steuerung denkbar.

Zweckmäßigerweise handelt es sich des Weiteren bei dem Fluid um Öl, wodurch der gewünschte Bremseffekt zuverlässig erzielbar ist und gleichzeitig eine Korrosion von Bauteilen des hydrodynamischen Retarders ausgeschlossen werden kann. Zudem kann je nach Fahrzeugsystem und Anordnung des Retarders Öl eines benachbarten Getriebes mitverwendet werden.

Weitere, die Erfindung verbessernde Maßnahmen werden nachstehend gemeinsam mit der Beschreibung einer bevorzugten Ausführungsform der Erfindung anhand der Figuren näher dargestellt.

Es zeigt:
- Fig.1: eine schematische Ansicht eines Antriebsstranges eines Kraftfahrzeuges, bei welchem der erfindungsgemäße hydro- dynamische Retarder Anwendung findet;
- Fig.2: eine Schnittansicht eines Bereichs des erfindungsgemäßen hydrodynamischen Retarders; und
- Fig.3: eine perspektivische Ansicht eines Gehäuseteils des erfin- dungsgemäßen hydrodynamischen Retarders.

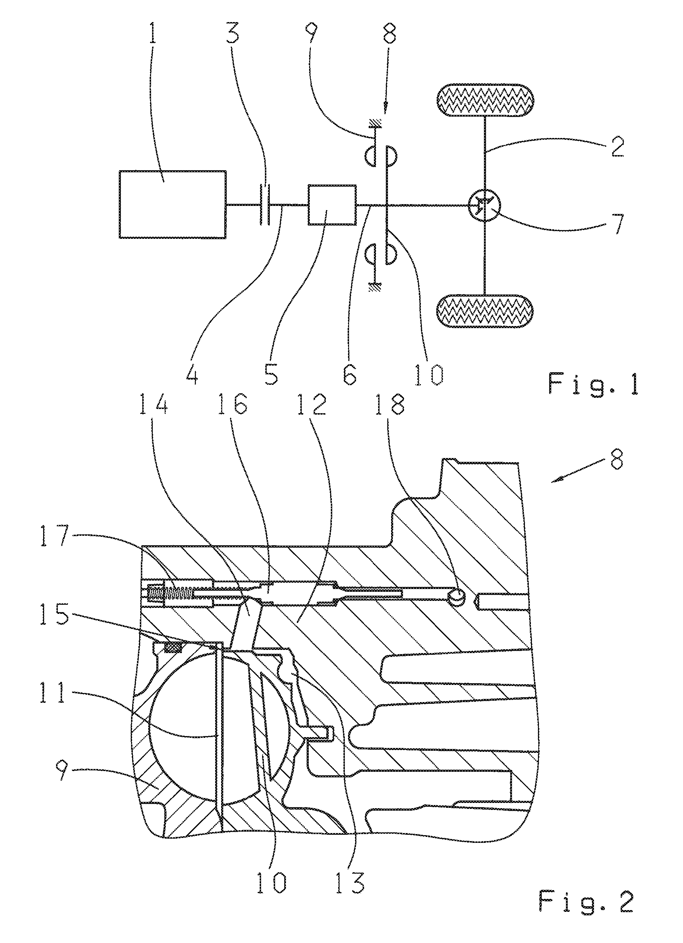

In Fig.1 ist eine schematische Ansicht eines Antriebsstranges eines Kraftfahrzeuges zu sehen, über welchen die Leistung eines Motors 1 zu einer Antriebsachse 2 übertragen werden kann. Dem Motor 1 ist hierbei ein Anfahrelement 3 unmittelbar nachgeschaltet, welches die Verbindung zu einer Eingangswelle 4 eines Getriebes 5 herstellt. Mittels dieses Getriebes 5 werden die Motordrehzahlen und -momente in für den Vortrieb des Kraftfahrzeuges geeignete Drehzahlen und Drehmomente übersetzt. Diese werden im weiteren Verlauf über eine Abtriebswelle 6 des Getriebes 5 und mittels eines Achsgetriebes 7 auf die Antriebsachse 2 des Kraftfahrzeugs zu dessen Vortrieb übertragen. Zwischen dem Getriebe 5 und der Antriebsachse 2 ist des Weiteren ein hydrodynamischer Retarder 8 nach Art eines Sekundärretarders platziert, über welchen lang andauernde, intensive Abbremsvorgänge des Kraftfahrzeuges, beispielsweise Beharrungsbremsungen bei Bergabfahrten, durchgeführt werden können. Dieser hydrodynamische Retarder 8 verfügt über einen feststehenden Stator 9 und einen Rotor 10, der auf der Abtriebswelle 6 platziert ist und mit deren Drehgeschwindigkeit rotiert. Des Weiteren weisen der Stator 9 und der Rotor 10 jeweils Beschaufelungen auf, die einander zugewendet sind.

Wie aus der Schnittansicht eines Bereichs des erfindungsgemäßen hydrodynamischen Retarders 8 in Fig.2 ersichtlich ist, bilden der Rotor 9 und der Stator 10 zwischen sich einen Arbeitsraum 11 aus, welcher über - hier nicht weiter dargestellte - Zulaufmittel mit Fluid in Form von Öl aus einem externen Kreislauf befüllbar ist. Dieses Öl wird daraufhin durch die Beschaufelung des Rotors 10 in Richtung der Beschaufelung des Stators 9 beschleunigt und dort verzögert, was eine Umsetzung der kinetischen Energie in Wärme mit sich bringt und eine Abbremsung der Rotationsbewegung des Rotors 10 hervorruft. Entsprechend der in den Arbeitsraum 11 eingebrachten Fluidmenge kann dabei das erzeugbare Bremsmoment gesteuert werden. Das am Stator 9 verzögerte Öl wird im Anschluss daran über die Beschaufelung wieder zum Rotor 10 zurückgeleitet. Nach Beendigung des Abbremsvorganges kann das Fluid über - ebenfalls nicht dargestellte - Rücklaufmittel wieder in den externen Kreislauf zurückgeführt werden.

Allerdings ist es möglich, dass Öl in einen zwischen dem rückwärtigen Bereich des Rotors 10 und einem umliegenden Gehäuse 12 gebildeten Retarderraum 13 gelangt. Diese Ölmenge sorgt auch im Nicht-Bremsbetrieb zusammen mit eventuell noch im Arbeitsraum 11 befindlichem Restöl für Reibung und dementsprechend für ein bestimmtes Schleppmoment des hydrodynamischen Retarders 8. Um diese Restölmengen sowohl aus dem Arbeitsraum 11 als auch dem Retarderraum 13 im Nicht-Bremsbetrieb zuverlässig abführen zu können, ist im oberen Bereich des Gehäuses 12 ein Auslasskanal 14 vorgesehen, welcher in einen zwischen Rotor 10 und Gehäuse 12 in radialer Richtung gebildeten Dichtspalt 15 einmündet. Dieser Auslasskanal verläuft in radialer Richtung im Gehäuse 12 und wird vollständig vom Außendurchmesser des Rotors 10 überdeckt. Durch die Dynamik des Rotors 10 wird dabei eine eventuell vorhandene Restölmenge aus dem Arbeitsraum 11 und/oder dem Retarderraum 13 in den Auslasskanal 14 gedrückt und auch an einem Zurücklaufen in den Dichtspalt 15 durch den Rotor 10 gehindert. Durch eine Platzierung des Auslasskanals 14 am obersten Punkt des Gehäuses 12 kann diese Abführung druckfrei erfolgen, da sich der Auslasskanal 14 hierbei oberhalb des Ölspiegels befindet.

Des Weiteren ist oberhalb des Auslasskanals 14 ein schaltbares Ventil 16 platziert, das in einer Öffnungsstellung das Abfließen von Öl über den Auslasskanal 14 ermöglicht. Hierbei wird dieses Ventil 16 über eine Feder 17 in der Öffnungsstellung gehalten und verschließt den Auslasskanal nur bei einer hydraulischen Druckbeaufschlagung über eine Steuerbohrung 18. Es ist hierbei möglich, diese Steuerbohrung 18 hydraulisch mit den Zulaufmitteln des Arbeitsraums 11 zu koppeln, so dass bei Befüllung des Arbeitsraums 11 das Ventil 16 geschlossen und somit eine Leckage über den Auslasskanal 14 unterbunden wird.

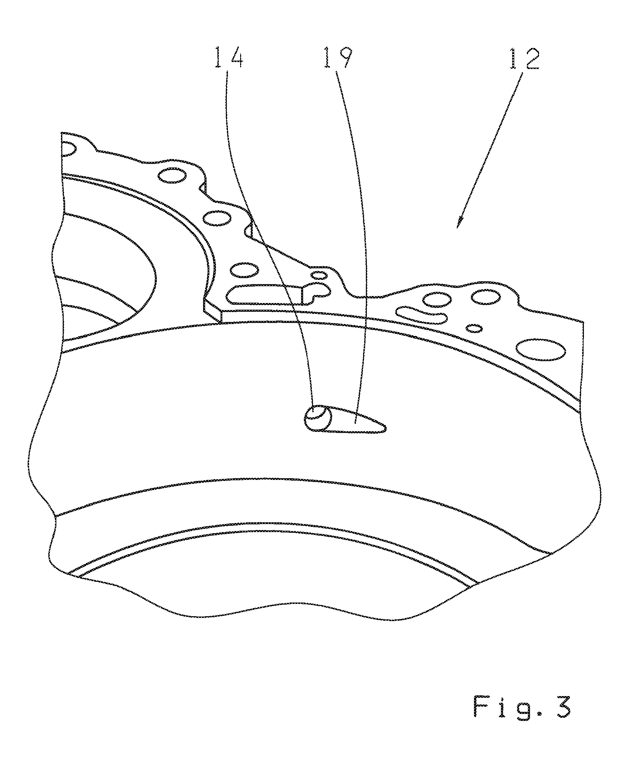

Schließlich ist in Fig.3 eine perspektivische Ansicht eines Teils des Gehäuses 12 dargestellt. Wie hieraus zu erkennen ist, ist im Bereich des Auslasskanals 14 eine Tasche 19 vorgesehen, die tangential zum Außendurchmesser des hier nicht zu sehenden Rotors 10 angeordnet ist. Mittels dieser Tasche 19 wird die Beförderung von Öl über den Rotor 10 in den Auslasskanal 14 deutlich verbessert.

Mittels des Auslasskanals 14 des erfindungsgemäßen hydrodynamischen Retarders 8 ist es somit möglich, das Schleppmoment des Retarders im Nicht-Bremsbetrieb erheblich zu reduzieren und somit den Gesamtwirkungsgrad zu verbessern, sowie den Kraftstoffverbrauch des Kraftfahrzeuges abzusenken.

### Bezugszeichen

- 1: Motor
- 2: Antriebsachse
- 3: Anfahrelement
- 4: Antriebswelle
- 5: Getriebe
- 6: Abtriebswelle
- 7: Achsgetriebe
- 8: hydrodynamischer Retarder
- 9: Stator
- 10: Rotor
- 11: Arbeitsraum
- 12: Gehäuse
- 13: Retarderraum
- 14: Auslasskanal
- 15: Dichtspalt
- 16: Ventil
- 17: Feder
- 18: Steuerbohrung
- 19: Tasche

## Patentansprüche

1. Hydrodynamischer Retarder (8) für einen Antriebsstrang eines Kraftfahrzeuges, mit einem Rotor (10) und einem Stator (9), welche jeweils mit Schaufeln bestückt und einander zugewendet in einem gemeinsamen Gehäuse (12) platziert sind, wobei zwischen dem Rotor (10) und dem Stator (9) ein Arbeitsraum (11) ausgebildet ist, welcher über einen externen Kreislauf mit einer definierten Menge eines Fluides befüllbar ist, um mittels Beschleunigung dieses Fluides durch die Schaufeln des Rotors (10) und anschließende Verzögerung an den Schaufeln des Stators (9) eine Bewegung des Rotors (10) gezielt abzubremsen, **dadurch gekennzeichnet, dass** in einen, zwischen Rotor (10) und Gehäuse (12) in radialer Richtung ausgebildeten Dichtspalt (15) ein Auslasskanal (14) einmündet, welcher radial im Gehäuse (12) verläuft und über den zwischen das Gehäuse (12) und den Rotor (10) gelangtes Fluid abführbar ist.

2. Hydrodynamischer Retarder (8) nach Anspruch 1, **dadurch gekennzeichnet, dass** der Auslasskanal (14) im oberen Bereich des Gehäuses (12) ausgebildet ist.

3. Hydrodynamischer Retarder (8) nach Anspruch 1 oder 2, **dadurch gekennzeichnet, dass** im Bereich der Einmündung des Auslasskanals (14) in den Dichtspalt (15) eine Tasche (19) vorgesehen ist, welche tangential zu einem Außendurchmesser des Rotors (10) orientiert angeordnet ist.

4. Hydrodynamischer Retarder (8) nach Anspruch 3, **dadurch gekennzeichnet, dass** die Tasche (19) immer vollständig mit dem Außendurchmesser des Rotors (10) überdeckt ist.

5. Hydrodynamischer Retarder (8) nach einem der vorhergehenden Ansprüche, **dadurch gekennzeichnet, dass** der Auslasskanal (14) über ein schaltbares Ventil (16) verschließbar ist.

6. Hydrodynamischer Retarder (8) nach Anspruch 5, **dadurch gekennzeichnet, dass** das Ventil (16) hydraulisch betätigbar ist.

7. Hydrodynamischer Retarder (8) nach einem der vorhergehenden Ansprüche, **dadurch gekennzeichnet, dass** das Fluid Öl ist.

8. Antriebsstrang eines Kraftfahrzeuges, umfassend ein Getriebe (5) und eine Antriebsachse (2), zwischen welchen ein hydrodynamischen Retarder (8) nach einem der Ansprüche 1-7 platziert ist.
